# EUROPÄISCHE PATENTANMELDUNG

(11) **EP 0 784 033 A1**
(43) Veröffentlichungstag der Anmeldung: **16.07.1997**
(21) Anmeldenummer: 97100027.8
(22) Anmeldetag: 03.01.1997
(51) Int. Cl.: C01G 23/08, C09C 1/36

(54) **Verfahren zur thermischen Behandlung von Titandioxid in einer zirkulierenden Wirbelschicht und dessen Verwendung**

(30) Priorität: 15.01.1996 DE 19601143
(71) Anmelder: BAYER AG, 51368 Leverkusen (DE)
(72) Erfinder: Holle, Bernd-Michael, Dr., 47800 Krefeld (DE); Bayer, Eckhard, Dr., 47807 Krefeld (DE); Krekel, Jörg, Dr., 45136 Essen (DE)

(57) **Zusammenfassung**

Verfahren zur Herstellung von Titandioxydpigmenten durch Aufschluß von Titanrohstoffen mit Schwefelsäure und Hydrolyse der Aufschlußlösung, wobei das Hydrolysat vor der thermische Behandlung auf Partikelgrößen mit einem mittleren Durchmesser von 0,02 bis 10 mm agglomeriert wird und anschließend dieses agglomerierte Hydrolysat in einem beheizten Apparat thermisch behandelt wird in dem das Material durch ein von unten nach oben gerichtetes Gasgemisch derart aufgewirbelt wird, daß eine Gas-Feststoff-Strömung gebildet wird, das gebildete Gas-Feststoff-Gemisch von unten nach oben strömt und in einem zweiten, nachgeschalteten Apparat in Gas- und Feststoffkomponenten getrennt wird, wobei der Feststoffstrom wieder in den beheizten Apparat zurückgeführt wird, und am unteren des beheizten Apparates Produkt entnommen wird. Verwendung des hergestellten Titandioxids.

## Beschreibung

Die vorliegende Erfindung betrifft ein Verfahren zur Herstellung von Titandioxidpigmenten sowie deren Verwendung.

Titandioxid kommt in der Natur in drei Modifikationen vor, als Rutil, Anatas und Brookit. Technische Bedeutung haben die Kristallformen Rutil und Anatas primär als Weißpigmente, in kleinerem Umfang als technisches Material, z.B. für Katalysatoren. Die Herstellung erfolgt nach zwei technischen Verfahren, dem Sulfat- und dem Chlorid-Verfahren (siehe Ullmanns Encyklopädie der techn. Chemie, 4. Auflage, Band 18, Seite 574).

Das ältere Sulfatverfahren beruht auf dem Aufschluß von Titan-Rohstoffen mit Schwefelsäure. Aus der schwefelsauren Lösung wird ein relativ reines Titandioxidhydrat durch thermische Hydrolyse gefällt. Das Hydrat wird dann nach verschiedenen physikalischen und chemischen Reinigungsprozessen sowie gegebenenfalls nach Zusatz von Modifikatoren und Rutilkeimen in Drehrohröfen kalziniert und bei Temperaturen von ca. 800 bis 1100°C zur Anatas- oder Rutil-Kristallmodifikation geglüht. Dieser sogenannte Ofenklinker wird anschließend gemahlen und in den meisten Fällen je nach Verwendungszweck unterschiedlich nachbehandelt.

Beim Chloridverfahren werden die entsprechend aufbereiteten Titanrohstoffe gemeinsam mit einem Brennstoff in einem Wirbelbettreaktor chloriert. Nach der Reinigung von zahlreichen Nebenprodukten wird das Titantetrachlorid in der Regel nach Zusatz von Aluminiumchlorid bei Temperaturen von oberhalb ca. 1000°C zu Titandioxid in Rutilform verbrannt und das Chlor zurückgewonnen. Das Pigment wird wie beim Sulfatverfahren in der Regel anschließend nachbehandelt.

Die zwei Herstellungsverfahren liefern Pigmente mit zum Teil unterschiedlichen Eigenschaften. Die wichtigsten Eigenschaften der Pigmente sind die optischen Eigenschaften, wie Aufhell-, Streu- und Deckvermögen, Helligkeit, Farbton, Glanzgebung und -schleier, aber auch Dispergierbarkeit sowie Licht- und Wetterstabilität. Diese Eigenschaften hängen hauptsächlich von der Partikelgröße und deren Verteilung, von der Kristallmodifikation, von Spurengehalten chemischer Elemente im Kristallgitter und von der anorganischen und organischen Nachbehandlung sowie der abschließenden Mikronisierung ab.

Beim Sulfatverfahren erfolgt die Kalzinierung meist in Drehrohröfen mit Längen von ca. 30 bis 60 m, nachdem das Hydrat mit den notwendigen Dotierungschemikalien versehen und mittels Filterapparaten auf ca. 40 bis 50 Gew.-% Feststoff entwässert worden ist. Diese Drehrohröfen werden direkt mit Verbrennungsgasen, die im Gegenstrom zum Feststoff geführt werden, beheizt. Etwa zwei Drittel der Ofenlänge dienen der Trocknung des Produktes und der Abspaltung der gebundenen Schwefelsäure. Die Auslauftemperatur des Ofenklinkers beträgt in Abhängigkeit von Kristallmodifikation, Pigmenttyp, Durchsatz und Ofenfahrweise (Temperaturprofil) etwa 800 bis 1100°C.

Die Pigmentqualität (Rutilgehalt, Partikelgröße und deren Verteilung sowie optische Daten) hängt, wie bekannt, von den Betriebsparametern und der Konstanz dieser Parameter im Drehrohrofen ab. Es hat deshalb in der Vergangenheit nicht an Versuchen gefehlt, die Fahrweise der Drehrohröfen zu verbessern. So kann man den Drehrohrofen mit Einbauten, wie Schnecken oder Hubschaufeln, versehen, um den Wärmeübergang zu verbessern. Ferner kann die Temperaturregelung so optimiert werden, daß unabhängig von Mengen- oder Feuchteschwankungen der Beschickung annähernd das gleiche Temperaturprofil erhalten bleibt. Weiterhin ist es Stand der Technik, die Wärme des Kalzinierabgases und des austretenden Ofenklinkers weitgehend auszunutzen, u.a. durch die teilweise Abgas-Rückführung beziehungsweise durch die Verwendung der für die Abkühlung des Ofenklinkers eingesetzten Kühlluft als Primär- oder Sekundärluft für den Drehrohrofen. Auch kann man so den Sauerstoffgehalt des Gases im Ofen konstanter einstellen.

Das Drehrohrverfahren weist mehrere Vor- und Nachteile auf. Zu den Vorteilen gehören eine einfache und bewährte Technik, die mögliche Verwendung von Filterkuchen als Beschickung und ein einfacher definierter Feststofftransport, eine problemlose Handhabung unterschiedlicher Produktzustände sowie eine gut definierte Mindestverweilzeit für die Pigmente.

Als Nachteil muß aufgeführt werden, daß die Kalzinierung im Drehrohrofen relativ aufwendig und unwirtschaftlich in den Betriebskosten ist, da zur Herstellung von größeren Pigmentmengen (5 bis 15 t/h) ein sehr großer Apparat notwendig ist, der durch die großen Außenflächen einen hohen Wärmeverlust aufweist. Wegen der bewegten Teile ist eine Abdichtung oft nur unzureichend gewährleistet, so daß viel Falschluft in den Apparat eindringen kann. Die kompakte, bodengängige Schüttung bedingt auch in Radialrichtung des Drehrohres eine breite Temperaturverteilung. Bei exothermen Vorgängen können örtliche Temperaturspitzen auftreten. Weiterhin werden bei der Kalzinierung des Filterkuchens schmierende und klebrige Produktzustände durchlaufen, die zu Klumpenbildung und Staus im Produktfluß führen können. Daher kann eine einheitliche Verweilzeit nicht eingehalten werden.

Um die Schwankungen auszugleichen, müssen die Glühbedingungen mit größeren Verweilzeiten als bei idealen Bedingungen eingestellt werden (6 bis 12 h). Damit können aber unerwünschte Spurenelemente in den Rutil diffundieren. Dies kann zu ungleichmäßigen und unzureichenden Produkteigenschaften, wie beispielsweise verminderter Helligkeit führen. Durch die langen Verweilzeiten kommt es ferner bei Produktwechsel zu langen Übergangsperioden, in denen noch keine konstanten Verhältnisse eingestellt sind.

Um die Nachteile der Drehrohrtechnik ganz oder teilweise zu umgehen, wurden thermische Behandlungen von Feststoffen in anderen Apparaten diskutiert. In der Vergangenheit wurden deshalb alternative Apparatekonzepte vorgeschlagen. So kann man die eigentliche Trocknung des Aufgabegutes in einem gesonderten vorgeschalteten Apparat vornehmen, z.B. in einem Wirbelschicht- oder in einem Spin-Flash-Trockner. Vorteile beim Energieverbrauch bietet z.B. ein indirekt beheizter Drehrohrofen, der aber wegen der wärmebeständigen Werkstoffe höhere Investitionskosten erfordert. Vorgeschlagen wurden auch Fest- oder Wanderbetten mit definierten Verweilzeiten. Für Feststoff-Anwendungen bei hohen Temperaturen werden auch sogenannte Ringherd- oder Etagenöfen eingesetzt.

Anstelle eines Drehrohrofens können auch ein oder vorzugsweise mehrere hintereinander geschaltete stationäre Wirbelschicht-Reaktoren eingesetzt werden, die große Vorteile in der Wirtschaftlichkeit sowie eine Vergleichmäßigung der Temperatur und der Gasatmosphäre und damit eine konstantere Pigmentqualität erwarten lassen. Nachteilig ist jedoch, daß wegen der breiten Partikelgrößenverteilung des Aufgabematerials (feuchter oder vorgetrockneter Filterkuchen) eine für die Wirbelung der groben Partikel notwendige Gasgeschwindigkeit zum Austrag einer wesentlichen Menge an Feinanteil fuhrt.

Beim Einsatz einer zirkulierenden Wirbelschicht, wie in DE-A 2 524 540 zur Reduktion von Eisenerz zu Magnetit beschrieben, benötigt man feste Partikel in der Größenordnung von 20 bis 300 µm mit hinreichend hoher Abriebstabilität. Feinanteil (< 20 µm) wird infolge der hohen Wirbelgeschwindigkeiten mit dem Abgas ausgetragen. Pigmente mit Partikelgrößen < 10 µm sind daher im allgemeinen für den Einsatz ungeeignet. Pigment-Granulate, wie in EP-A 396 975 beschrieben, können infolge der notwendigen Bindemittel-Anteile zu unerwünschten Nebeneffekten, wie Sintern, Teilreduktion etc. führen, die sich negativ auf die optischen Eigenschaften der Pigmente auswirken können.

Aufgabe war es daher, einen wirtschaftlichen Kalzinierungsprozeß für Titandioxid-Pigmente zur Verfügung zu stellen, mit dem es außerdem gelingt, Pigmente mit hoher Qualität (vergleichbar mit den im Drehrohrofen hergestellten Pigmenten oder besser) herzustellen und diese Qualität auch konstant zu liefern.

Überraschenderweise wurde gefunden, daß die gestellte Aufgabe gelöst werden kann, wenn die Kalzinierung unter geeigneten Bedingungen in einer oder vorzugsweise mehreren zirkulierenden Wirbelschichten durchgeführt wird.

Gegenstand der Erfindung ist ein Verfahren zur Herstellung von Titandioxidpigmenten durch Aufschluß von Titanrohstoffen mit Schwefelsäure, Hydrolyse der Aufschlußlösung, Filtration des Hydrolysates, gegebenenfalls Reinigung und Zugabe von Rutilkeimen und Dotierungschemikalien und thermische Behandlung, welches dadurch gekennzeichnet ist, daß das Hydrolysat vor der thermischen Behandlung auf Partikelgrößen mit einem mittleren Durchmesser von 0,02 bis 10 mm agglomeriert wird und anschließend dieses agglomerierte Hydrolysat in einem beheizten Apparat thermisch behandelt wird, in dem das Material durch ein von unten nach oben gerichtetes Gasgemisch derart aufgewirbelt wird, daß eine Gas-Feststoff-Strömung gebildet wird, das gebildete Gas-Feststoff-Gemisch von unten nach oben durch den Apparat strömt und in einem zweiten, nachgeschalteten Apparat in Gas- und Feststoffkomponenten getrennt wird, wobei der Feststoffstrom wieder in den beheizten Apparat zurückgeführt wird, und am unteren Teil des beheizten Apparates Produkt entnommen wird.

Mit dem erfindungsgemäßen Verfahren ist es möglich, TiO₂-Pigmente mit konstant guten optischen Eigenschaften unter verbesserten wirtschaftlichen Bedingungen herzustellen.

Helligkeit und Farbton der Titandioxidpigmente hängen in hohem Maß von deren Gehalt an färbenden Spurenelementen, wie beispielsweise Eisen, Chrom, Vanadium, Mangan und Kupfer ab. Daher muß der Gehalt an diesen Elementen möglichst gering gehalten werden. Nach dem Stand der Technik wird neben einer intensiven Waschung des Titandioxid-Hydrates ein chemisches Reinigungsverfahren angewendet.

Der gewaschene Titandioxid-Hydratschlamm wird mit einer anorganischen Säure, beispielsweise Salz- oder Schwefelsäure und einem Reduktionsmittel versetzt. Als Reduktionsmittel dienen entweder Salze der Sulfoxysäure oder Metallpulver bzw. -pasten, beispielsweise Aluminiumpulver bzw. -pasten, beispielsweise Aluminiumpulver. Durch dieses Vorgehen werden die an der Oberfläche des Titandioxids absorbierten Spurenelemente abgelöst und zu niederwertigen Oxidationsstufen reduziert (sog. "Bleiche"). Durch eine nachfolgende intensive Waschung können dann die Spurenelemente weitgehend entfernt werden.

Ein Teil des abgetrennten Gasgemisches kann in den beheizten Apparat zurückgeführt werden.

Ein geeignetes Agglomerat wird vorzugsweise durch Verdüsung oder Zerstäubung erzeugt oder über Aufbaugranulation unter Einsatz von Wasser oder über Kompaktierverfahren.

In einer bevorzugten Ausführungsform des Verfahrens wird das gereinigte und dotierte Titandioxidhydrat auf eine Partikelgröße von 0,04 bis 0,2 mm agglomeriert. Dies kann beispielsweise durch Pastenverformung oder durch Agglomeration per Verdüsung oder Zerstäubung in einem Sprüh- oder Venturitrockner oder in einem Trockner mit gerührtem Wirbelbett erfolgen. Ein geeignetes Agglomerat kann auch in einem Granulator wie beispielsweise Sprüh-, Teller-, Walzen- oder Mischgranulator erzeugt werden.

Neben Rutilkeimen und Dotierungschemikalien können vor der Agglomeration vorzugsweise noch weitere organische und anorganische Bindemittel zugesetzt werden, um eine geeignete Granulatfestigkeit zu erzielen.

Bevorzugt wird die thermische Behandlung in mehreren Apparatesystemen mit zirkulierender Wirbelschicht durchgeführt. Bei einer optimalen Ausgestaltung des Verfahrens werden bis zu 5 Apparatesysteme mit zirkulierender Wirbelschicht, vorzugsweise 2 bis 5, und zwar mit abgestuften Temperaturen, hintereinander geschaltet.

Dabei können in mehreren, hintereinander geschalteten zirkulierenden Wirbelschichten bevorzugt verschiedene thermische Behandlungsschritte, wie z.B. Aufwärmung, Trocknung, Sulfatentfernung und Pigmentbildung, durchgeführt werden. Aus dem letzten Apparatesystem kann der entnommene Feststoff beispielsweise zu einem Kühlaggregat geleitet und danach in üblicher Weise nachbehandelt werden (z.B. Mahlung, anorganische und/oder organische Nachbehandlung, Mikronisierung).

Das Gasgemisch kann nach Austritt aus dem Trennapparat (Zyklon oder Elektrofilter) vorzugsweise zur weiteren Nutzung der Enthalpie in einen anderen Wirbelschicht-Apparat geführt werden, vorteilhafterweise im Gegenstrom zum Feststoffstrom. Das letzte Apparatesystem hat vorzugsweise die höchste Temperatur, die bevorzugt durch Verbrennung geeigneter Heizstoffe, wie Erdgas oder Öl, erreicht wird, entweder durch eine externe Rauchgaserzeugung (indirekt) oder durch eine Verbrennung innerhalb der Wirbelschicht (direkt). Die Temperatur sollte vorzugsweise zwischen 800 und 1000°C liegen und kann auch elektrisch erzeugt werden.

Bevorzugt wird für die Behandlung der Feststoffe in den Wirbelschichten eine konstante Gasatmosphäre von 5 bis 20 Vol.-%, vorzugsweise 10 bis 15 Vol.-% Sauerstoff eingestellt.

Bevorzugt wird das Gas-Feststoff-Verhältnis im beheizten Apparat auf 200 bis 1300 Nm³/t Pigment eingestellt.

Es sollte vorzugsweise eine effektive Gasgeschwindigkeit von 0,4 bis 10, vorzugsweise 3 bis 6 m/s, bezogen auf den leeren Apparat, eingestellt werden.

Der Druckverlust in einer Wirbelschicht sollte bevorzugt so festgelegt werden, daß die mittlere Verweilzeit des Feststoffes zwischen 0,1 und 1, vorzugsweise 0,2 und 0,5 Stunden beträgt.

Die Mindestverweilzeit des Feststoffes sollte vorzugsweise mehr als 6 Minuten betragen.

Die zirkulierenden Wirbelschichten können auch noch mit anderen Apparatetypen kombiniert werden, beispielsweise mit einem Verweilzeitbehälter, z.B. zur Kristallreifung.

Die so hergestellten Titandioxide werden für die Einfärbung von Lacken, Farben, Kunststoffen, Papier, Keramik, Email, Baustoffen, Gummi, Bitumen, Kosmetika, Lebensmitteln und andere technische Anwendungen, wie z.B. Schweißelektroden, Katalysatoren und UV-Absorber, verwendet.

### Beispiele

In den nachfolgenden Beispielen 1 bis 3 wurde ein technisch hergestelltes Titandioxid-Hydrolysat verwendet. Durch Aufschluß von Ilmenit (ca. 56 % TiO₂) und Titanschlacke (ca. 78 % TiO₂) mit Schwefelsäure wurde eine Aufschlußlösung mit folgender Zusammensetzung hergestellt:
- TiO₂: 219 g/l
- H₂SO₄ gesamt: 34 Gew.-%
- H₂SO₄ frei: 28 Gew.-%
- FeSO₄: 9 Gew.-%
- Ti³⁺: 1,9 g/l

Die Aufschlußlösung wurde unter Zugabe von Hydrolysekeimen und Wasser anschließend hydrolysiert. Danach wurde filtriert und gewaschen. Das erhaltene Titandioxid-Hydrolysat wurde gebleicht (reduzierende Behandlung mit Aluminiumpaste und Salzsäure) und erneut gewaschen. 4 Gew.-% Rutilkeime sowie 0,31 Gew.-% Na₂O, 0,23 Gew.-% K₂O, 0,12 Gew.-% P₂O₅ und 0,62 Gew.-% Al₂O₃ als Einstellchemikalien (jeweils bezogen auf TiO₂) wurden zugesetzt.

### Beispiel 1 (Vergleich)

Das oben hergestellte Hydrolysat wurde über Preßfilter auf einen Feststoffgehalt von 44 Gew.-% TiO₂ entwässert und anschließend auf einen direkt beheizten Drehrohrofen aufgegeben. Die Gesamtverweilzeit des Produktes im Ofen betrug ca. 10 Stunden, die Auslauftemperatur des Ofenklinkers 965°C. Nach Abkühlung wies der Ofenklinker die folgenden Kenndaten auf:
- Rutilgehalt:: 99,7 %
- Aufhellvermögen: 590
- Grauwert R_{z}-Rₓ:: 2,8
- Helligkeit R_{y}:: 92,9
- Gelbstich Rₓ-R_{z}:: 3,4

Das Aufhellvermögen wurde folgendermaßen bestimmt:

100 mg Pigment werden auf einem Kleinen Uhrglas auf der Analysenwaage eingewogen. Auf einem zweiten, größeren Uhrglas werden auf der Normalwaage 5,0 g Graupaste eingewogen. Die 100 mg TiO₂ werden gemeinsam mit den 5,0 g Graupaste auf die untere Mullerplatte (Glasplatte) der Farbenausreibemaschine gebracht, verlustfrei vorgemischt und bei voller Belastung der Mullerplatte (1,4 N/cm²) in fünf Abschnitten zu je 25 Umdrehungen angerieben. Nach jedem Abschnitt wird die Paste mit einem Kunststoffspatel zur Mitte gesammelt.

Die fertig ausdispergierte graue Paste wird mit einer Rakel in den Pastenteller glatt eingestrichen und mit Hilfe des Farbmeßgerätes gemessen und die Werte Rₓ, R_{y}, R_{z}, R_{z}-Rₓ, (Grauwert) bestimmt.

Die Präparation der Bezugspigmente (Standard) erfolgt in gleicher Weise wie die der Proben.

Der Weißgrad in Alkyldal L 64 nach DIN 55 983 (DIN ISO 787) wurde folgendermaßen bestimmt:
- Arbeitsgeräte:: Waage, Genauigkeit ± 0,001 g
Farbenausreibemaschine (Muller)
Pastenteller und Rakel
Uhrgläser (Durchmesser 8 cm)
Farbmeßgerät mit festangeschlossenem Computer und
Drucker
- Hilfsmittel:: Weißgradpaste zur Bestimmung des Weißgrades
Die Herstellung der Paste erfolgt folgendermaßen: 963 g Alkyldal L 64, 100 %ig, (Bayer AG) werden mit 52 g Aerosil 200 (Degussa) vermischt und einmal mit Hilfe eines Dreiwalzenstuhles dispergiert.
- Arbeitsweise:: Die 0,3294 ml entsprechende Menge TiO₂-Pigment (0,3294 ml x Dichte = Einwaage in g) werden gemeinsam mit 2,000 g Weißgradpaste aus dem Pastendosierer auf die untere Mullerplatte (überzogen mit Polyamidfolie) gebracht, verlustfrei vorgemischt und bei voller Belastung der Mullerplatten (1,4 N/cm²) in vier Abschnitten zu je 25 Umdrehungen angerieben. Nach jedem Abschnitt wird die Paste mit einem Kunststoffspatel zur Mitte gesammelt.
Die fertig ausdispergierte weiße Paste wird mit einer Rakel in den Pastenteller glatt eingestrichen und bis zum Messen mit Hilfe des Farbmeßgerätes mit einem schwarzen Deckel lichtdicht abgedeckt, um eventuelle Verfärbungen durch Fototropie zu vermeiden. Es werden die Werte Rₓ, R_{y}, R_{z}, Rₓ-R_{z} (Gelbstich) bestimmt.
Die Präparation der Bezugspigmente erfolgt in gleicher Weise wie die der Proben.

### Beispiel 2 (erfindungsgemäß)

Der in Beispiel 1 hergestellte Preßfilterkuchen wurde mit Wasser auf einen Feststoffgehalt von 28 Gew.-% TiO₂ rückverdünnt und anschließend in einem Düsensprühtrockner mit einer Wasserverdampfungsleistung von 50 kg/h getrocknet. Das Trockengut wies einen TiO₂-Gehalt von 81,2 Gew.-% und eine mittlere Korngröße von ca. 0,06 mm auf.

Es wurde in einer Kalzinieranlage mit zirkulierender Wirbelschicht geglüht. Der Durchmesser des Wirbelofens betrug 125 mm bei einer Schachthöhe von 1800 mm. Die Wirbelluft wurde mittels eines Drehkolbengebläses von unten durch die Düsen mit seitlichen Bohrungen in den Schacht geleitet. Die Luft wurde zur Herabsetzung der Strömungsgeschwindigkeit teilweise durch O₂ ersetzt. Die Erhitzung erfolgte über eine Gaslanze mit vier seitlichen und einer zentralen Bohrung. Als Brennstoff wurde Erdgas verwendet. Die Ofenabgase passierten einen Rückführzyklon, in dem der aus der Wirbelschicht mitgeführte Feststoff abgeschieden und über eine mit einer Pendelklappe abgedichtete Rohrleitung direkt wieder in die Wirbelschicht zurückgeführt wird. Der Inhalt der Wirbelschicht wird über den Differenzdruck konstant gehalten. Die mittlere Verweilzeit wird hierüber variiert.

Das Heißgas wurde, nachdem es den Rückführzyklon passiert hatte, durch einen Abgaszyklon zur Abscheidung noch vorhandener Feststoffe geleitet.

Der Materialeintrag in die Wirbelschicht erfolgte mit einer drehzahlgeregelten Schnecke etwas unterhalb der Schachtmitte.

In der zirkulierenden Wirbelschicht lagen folgende Betriebsbedingungen vor:
- Wirbelluft [Nm³/h]: 3,0
- Sauerstoff [Nm³/h]: 3,0
- Erdgas [Nm³/h]: 1,9
- Bett-Temperatur [°C]: 950
- Δp Ofen [mbar]: 15
- Eintrag [kg/h]: 4,2
- Bett-Austrag [kg/h]: 2,2
- Zyklon-Austrag [kg/h]: 1,2
- O₂ in Abgas [Vol-%]: 13,5
- mittl. Verweilzeit [min]: 45

Der als Bett-Austrag erhaltene Klinker wies nach 30-minütiger Mahlung in einer Achatmühle folgende Kenndaten auf:
- Rutilgehalt:: 95 %
- Aufhellvermögen:: 520
- Grauwert R_{z}-Rₓ:: 2,9
- Helligkeit R_{y}:: 92,1
- Gelbstich Rₓ-R_{z}:: 3,9

Aus den Pigment-Daten geht hervor, daß bei einstufiger zirkulierender Wirbelschicht die optischen Kenndaten eines im Drehrohrofen kalzinierten Produktes noch nicht ganz erreicht werden, da eine breite Verweilzeitverteilung vorliegt und somit die einzelnen Pigment-Partikel des Endproduktes unterschiedliche Glühzeiten durchlaufen haben. Durch den Gehalt an überglühtem Produkt weist der Ofenklinker im Vergleich zum Klinker aus dem Drehrohrofen eine größere Mahlhärte auf. Aus dem Beispiel ist jedoch auch zu erkennen, daß bereits in einer einstufigen zirkulierenden Wirbelschicht TiO₂-Pigment-Klinker mit annähernd typkonformen Eigenschaften hergestellt werden können.

### Beispiel 3 (erfindungsgemäß)

Das wie in Beispiel 2 vorgetrocknete Titandioxid-Hydrolysat wurde in einer 3-stufigen Kalzinieranlage mit zirkulierender Wirbelschicht thermisch behandelt. Das Heizgas wurde im Gegenstrom geführt, d.h. auf den letzten Reaktor aufgegeben und hinter dem ersten Reaktor wieder abgezogen. Die einzelnen Bett-Temperaturen betrugen 650°C für den ersten Reaktor, 800°C für den zweiten Reaktor und 940°C für den dritten Reaktor. Die Gesamt-Verweilzeit in der 3-stufigen Kalzinieranlage mit zirkulierender Wirbelschicht betrug 2 Stunden.

Die 3-stufige Anlage zur Kalzination in der zirkulierenden Wirbelschicht wird anhand der beiliegenden schematischen Zeichnung näher erläutert:

Das nach Beispiel 2 hergestellte Trockengut (8) wird über eine Dosierschnecke (4) auf den ersten Wirbelschicht-Reaktor (1) aufgegeben. Dieser ist mit Temperatur- und Druck-Maßstellen am Gaseintritt (T1, P1) und am Gasaustritt (T2, P2) versehen. Zur Erzeugung der zirkulierenden, heißen Wirbelschicht wird das Abgas des zweiten Wirbelschicht-Reaktors (2) aus dem Abgas-Zyklon (6) verwendet. Das Ofenabgas aus Reaktor (1) passiert einen Rückführzyklon (5), in welcher der aus der Wirbelschicht mitgeführte Feststoff abgeschieden und direkt wieder in den Wirbelschichtreaktor (1) zurückgeführt wird. Der Inhalt der Wirbelschicht wird über den Differenzdruck (P1-P2) konstant gehalten. Die mittlere Verweilzeit wird über diesen Differenzdruck eingestellt. Nachdem das Heißgas den Rückführzyklon (5) passiert hat, wird es durch einen weiteren Abgaszyklon (6) zur Abscheidung noch vorhandener Feststoffe (7) geleitet. Diese werden zweckmäßig dem Bett-Austrag des Reaktor (1) zugemischt, können aber auch separat ausgeschleust werden. Das Abgas (12) aus dem Abgas-Zyklon (6) von Reaktor (1) enthält neben den Verbrennungsbestandteilen des Erdgases (CO₂, H₂O) noch Stickstoff, Sauerstoff und abgespaltene Schwefelsäure sowie deren Zersetzungsprodukte Schwefeldioxid undSchwefeltrioxid.

Der Bett-Austrag aus Reaktor (1) dient als Rohstoff-Aufgabematerial für Reaktor (2). Dieser ist apparativ und meßtechnisch wie Reaktor (1) ausgestattet. Während Reaktor (1) eine Bett-Temperatur von 650°C aufweist, wird Reaktor (2) vorzugsweise durch das Heiz- und Wirbelgas, welches aus Reaktor (3) stammt, auf 800°C aufgeheizt.

In analoger Weise wird der Bett-Austrag von Reaktor (2) als Rohstoff-Aufgabematerial für Reaktor (3) verwendet. In Reaktor (3) wird von unten - wie in Beispiel 2 beschrieben - Erdgas, Luft und zusätzlich Sauerstoff aufgegeben. Die direkt im Wirbelbett stattfindende Verbrennung wird so gesteuert, daß sich in Reaktor (3) eine Bett-Temperatur von 940°C einstellt. Die entsprechenden Meßstellen für die Temperatur (T5, T6) bzw. den Differenzdruck (P5-P6) sind wie bei Reaktor (2) und (1) angeordnet. Der Bett-Austrag (9) von Reaktor (3) wird oberhalb des Gas-Eintritts abgezogen und stellt das kalzinierte Endprodukt dar. Der Zyklon-Austrag (7'') von Abgas-Zyklon (6'') kann je nach Rohstoff und Qualitätsanforderungen separat ausgeschleust oder aber mit dem ausgeschleusten Feststoff (9) vereinigt werden.

Der aus dem dritten Reaktor ausgeschleuste Klinker wies die folgenden Kenndaten auf:
- Rutilgehalt:: 99,8 %
- Aufhellvermögen:: 610
- Grauwert R_{z}-Rₓ:: 2,8
- Helligkeit R_{y}:: 93,1
- Gelbstich Rₓ-R_{z}:: 3,2

Wie den Daten zu entnehmen ist, konnte in der zirkulierenden Wirbelschicht ein TiO₂-Klinker hergestellt werden, welcher gegenüber dem im Drehrohrofen hergestellten Material ein höheres Aufhellvermögen, eine höhere Helligkeit und einen niedrigeren Gelbstich aufweist.

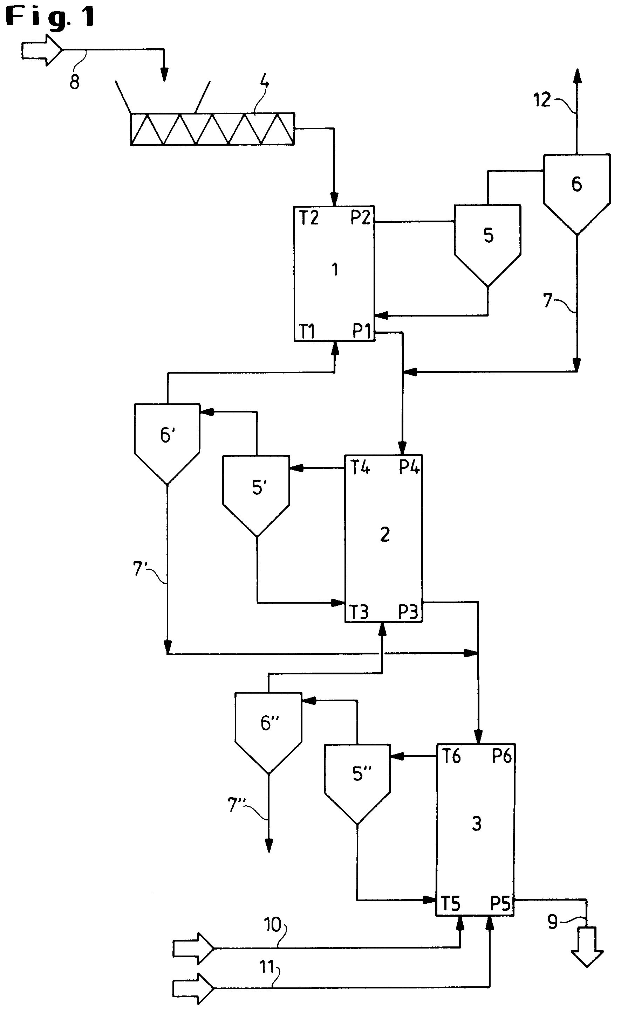

## Patentansprüche

1. Verfahren zur Herstellung von Titandioxidpigmenten durch Aufschluß von Titanrohstoffen mit Schwefelsäure, Hydrolyse der Aufschlußlösung, Filtration des Hydrolysates, gegebenenfalls Reinigung und Zugabe von Rutilkeimen und Dotierungschemikalien und thermische Behandlung, dadurch gekennzeichnet, daß das Hydrolysat vor der thermischen Behandlung auf Partikelgrößen mit einem mittleren Durchmesser von 0,02 bis 10 mm agglomeriert wird und anschließend dieses agglomerierte Hydrolysat in einem beheizten Apparat thermisch behandelt wird, in dem das Material durch ein von unten nach oben gerichtetes Gasgemisch derart aufgewirbelt wird, daß eine Gas-Feststoff-Strömung gebildet wird, das gebildete Gas-Feststoff-Gemisch von unten nach oben durch den Apparat strömt und in einem zweiten, nachgeschalteten Apparat in Gas- und Feststoffkomponenten getrennt wird, wobei der Feststoffstrom wieder in den beheizten Apparat zurückgeführt wird, und am unteren Teil des beheizten Apparates Produkt entnommen wird.

2. Verfahren gemäß Anspruch 1, dadurch gekennzeichnet, daß ein Teil des abgetrennten Gasgemisches in den beheizten Apparat zurückgeführt wird.

3. Verfahren gemäß einem der Ansprüche 1 oder 2, dadurch gekennzeichnet, daß ein geeignetes Agglomerat durch Verdüsung oder Zerstäubung erzeugt wird.

4. Verfahren gemäß einem oder mehreren der Ansprüche 1 bis 2, dadurch gekennzeichnet, daß ein geeignetes Agglomerat über Aufbaugranulation unter Einsatz von Wasser oder über Kampaktierverfahren erzeugt wird.

5. Verfahren gemäß einem oder mehreren der Ansprüche 1 bis 4, dadurch gekennzeichnet, daß die mittlere Partikelgröße der Agglomerate zwischen 0,04 und 0,2 mm beträgt.

6. Verfahren gemäß einem oder mehreren der Ansprüche 1 bis 5, dadurch gekennzeichnet, daß das Gas-Feststoff-Verhältnis im beheizten Apparat auf 200 bis 1300 Nm³/t Pigment eingestellt wird.

7. Verfahren gemaß einem oder mehreren der Ansprüche 1 bis 6, dadurch gekennzeichnet, daß in den Wirbelschichten eine effektive Gasgeschwindigkeit von 0,4 bis 10, vorzugsweise 3 bis 6 m/s, bezogen auf den leeren Apparat, eingestellt wird.

8. Verfahren gemäß einem oder mehreren der Ansprüche 1 bis 7, dadurch gekennzeichnet, daß der Druckverlust in der Wirbelschicht jeweils so festgelegt wird, daß die mittlere Verweilzeit des Feststoffes zwischen 0,1 und 1, vorzugsweise zwischen 0,2 und 0,5 Stunden beträgt.

9. Verfahren gemäß einem oder mehreren der Ansprüche 1 bis 8, dadurch gekennzeichnet, daß die Mindestverweilzeit des Feststoffes im System mehr als 6 Minuten beträgt.

10. Verfahren gemäß einem oder mehreren der Ansprüche 1 bis 9, dadurch gekennzeichnet, daß die thermische Behandlung in mehreren, hintereinander geschalteten zirkulierenden Wirbelschichten mit verschiedenen Temperaturen erfolgt.

11. Verfahren gemäß einem oder mehreren der Ansprüche 1 bis 10, dadurch gekennzeichnet, daß der beheizte Apparat direkt oder indirekt mit geeignetem Brennstoff oder elektrisch beheizt wird.

12. Verfahren gemäß einem oder mehreren der Ansprüche 1 bis 11, dadurch gekennzeichnet, daß eine konstante Gasatmosphäre von 5 bis 20, vorzugsweise 10 bis 15 Vol.-% Sauerstoff bei der thermischen Behandlung eingestellt wird.

13. Verfahren gemäß einem oder mehreren der Ansprüche 1 bis 12, dadurch gekennzeichnet, daß neben Rutilkeimen und Dotierungschemikalien vor der Agglomeration noch weitere organische oder anorganische Bindemittel zugesetzt werden.

14. Verwendung des nach den Ansprüchen 1 bis 13 hergestellten Titandioxids für die Einfärbung von Lacken, Farben, Kunststoffen, Papier, Keramik, Email, Baustoffen, Gummi, Bitumen, Kosmetika und Lebensmitteln.
